# EUROPEAN PATENT APPLICATION

(11) **EP 3 082 019 A2**
(43) Date of publication of application: **19.10.2016**
(21) Application number: 16165383.7
(22) Date of filing: 14.04.2016
(51) Int. Cl.: G06F 3/01, G06F 3/0481

(54) **DISPLAY APPARATUS AND METHOD FOR CONTROLLING THE SAME**

(30) Priority: 16.04.2015 KR 20150053878
(71) Applicant: Samsung Electronics Co., Ltd., Gyeonggi-do 16677 (KR)
(72) Inventor: Park, Hae-yoon, Seoul (KR); Kang, Dong-goo, Seoul (KR); Yoon, Yeo-jun, Seoul (KR); Lee, Yong-yeon, Suwon-si (KR); Cha, Sang-ok, Suwon-si (KR); Kwak, Ji-yeon, Seoul (KR)
(74) Representative: Nederlandsch Octrooibureau

(57) **Abstract**

A display apparatus is provided. The display apparatus includes a transparent display configured to display a plurality of graphic objects, and in response to a predetermined event occurring, interrupt displaying the graphic objects except for a predetermined graphic object among the plurality of displayed graphic objects, an image photographing unit configured to generate a photographed image by photographing a subject projected from the transparent display, and a controller configured to synthesize the generated photographed image and the predetermined graphic object.

## Description

### BACKGROUND

### 1. Field of the Disclosure

The present disclosure generally relates to a display apparatus and a method for controlling the same, and more particularly, to a display apparatus which provides an overall view of an actual object and a graphic object displayed on a transparent display, and a method for controlling the same.

### 2. Description of the Related Art

With the development of electronic technologies, various types of display apparatuses are used in various fields. Development of next-generation display apparatuses, such as, a transparent display apparatus, has accelerated in recent years.

A transparent display apparatus refers to a display apparatus in which a background at a rear side of a display is reflected due to its transparency. In the conventional art, a display panel is made of an opaque semiconductor compound, such as, silicon (Si), gallium arsenide (GaAs), and the like. However, various application fields which cannot be supported by the conventional display panel were developed, and efforts to develop a new type of electronic apparatus have been made. The transparent display apparatus is one of the developments according to these efforts.

The transparent display apparatus includes a transparent oxide semiconductor membrane, and thus, has transparency. When a user uses a transparent display apparatus, the user is able to view necessary information through the transparent display apparatus viewing a background at a rear side of the display apparatus. Accordingly, the transparent display apparatus may resolve spatial and temporal limits of the conventional display apparatuses and be used conveniently in various environments and for various uses.

The transparent display apparatus displays various information through a transparent display unit, and thus, an appearance of an actual object which is reflected at the rear side of the display is harmonized with the displayed information.

As user's needs have diversified, the transparent display is used in more environments. Accordingly, there is a need for a method for displaying information in a novel way.

### SUMMARY OF THE DISCLOSURE

The present disclosure has been made to address the aforementioned and other problems and disadvantages occurring in the related art, and an aspect of the present disclosure provides a display apparatus which provides an overall view of an actual object and a graphic object displayed on a transparent display and a method for controlling the same.

According to an aspect of the present disclosure, there is provided a display apparatus. The apparatus includes a transparent display configured to display a plurality of graphic objects, and in response to a predetermined event occurring, interrupt displaying the graphic objects except for a predetermined graphic object among the plurality of displayed graphic objects, an image photographing unit configured to photograph a subject projected from the transparent display to generate a photographed image, and a controller configured to synthesize the generated photographed image and the predetermined graphic object.

According to an aspect of the present disclosure, there is provided a method for controlling a display apparatus with a transparent display. The method includes displaying a plurality of graphic objects, interrupting, in response to a predetermined event occurring, displaying the graphic objects except for a predetermined graphic object among the plurality of displayed graphic objects, generating a photographed image by photographing a subject projected from the transparent display, and synthesizing the generated photographed image and the predetermined graphic object.

According to an aspect of the present disclosure, there is provided a computer-readable storage medium having a program for executing a method for controlling a display apparatus with a transparent display. The method includes displaying a plurality of graphic objects, interrupting, in response to a predetermined event occurring, displaying the graphic objects except for a predetermined graphic object among the plurality of displayed graphic objects, generating a photographed image by photographing a subject projected from the transparent display, and synthesizing the generated photographed image and the predetermined graphic object.

### BRIEF DESCRIPTION OF THE DRAWINGS

The above and/or other aspects of the present disclosure will be more apparent from the following detailed description of the present disclosure with reference to the accompanying drawings, in which:
FIGs. 1A and 1B are conceptual diagrams of a display apparatus according to an embodiment of the present disclosure;
FIG. 2 is a block diagram of a display apparatus according to an embodiment of the present disclosure;
FIGs. 3A-3C are views to describe an operation of changing a mode of a display apparatus according to an embodiment of the present disclosure;
FIGs. 4A-4C and 5A-5D are views to describe an occurrence of an event for changing a mode according to various embodiments of the present disclosure;
FIGs. 6A-6B are views to describe an operation of changing an image photographing screen of a display apparatus according to an embodiment of the present disclosure;
FIGs. 7A-7D are views to describe a map function of a display apparatus according to an embodiment of the present disclosure;
FIGs. 8A-8B are views to describe an augmented reality (AR) function of a display apparatus according to an embodiment of the present disclosure;
FIGs. 9, 10A-10D, and 11A-11C are views to describe a function of correcting an error in a photographed image of a display apparatus according to an embodiment of the present disclosure;
FIGs 12A-12B, 13, and 14A-14B are views to describe various functions of a display apparatus according to various embodiments of the present disclosure;
FIGs. 15A-15D, 16A-16B, 17A-17B, 18A-18C, 19A-19B, and 20A-20B are views to describe an operation of generating a synthetic image of a display apparatus according to various embodiments of the present disclosure;
FIGs. 21A-21B, 22A-22B, and 23 are views to describe a function of inputting writing on a display apparatus according to an embodiment of the present disclosure;
FIGs. 24A-24C and 25A-25B are views to describe a function of utilizing a dual display of a display apparatus according to various embodiments of the present disclosure;
FIG. 26 is a block diagram of a display apparatus according to another embodiment of the present disclosure; and
FIG. 27 is a flowchart to describe a method for controlling a display apparatus according to an embodiment of the present disclosure.

### DETAILED DESCRIPTION

Hereinafter, various embodiments of the present disclosure will be described with reference to the accompanying drawings. However, it should be understood that there is no limiting the present disclosure to the particular forms disclosed herein, rather, the present disclosure should be construed to cover various modifications, equivalents, and/or alternatives of embodiments of the present disclosure. In describing the drawings, similar reference numerals may be used to designate similar constituent elements.

The terms "first", "second",... may be used to describe various components, but the components are not limited by the terms. The terms are only used to distinguish one component from the others.

The terms used in the present disclosure are used to describe the embodiments, but do not limit the scope of the disclosure. The singular expression also includes the plural meaning unless defined differently in the context. In the present disclosure, the terms "include" and "consist of" designate the presence of features, numbers, steps, operations, components, elements, or a combination thereof that are written in the specification, but do not exclude the presence or possibility of the addition of one or more other features, numbers, steps, operations, components, elements, or a combination thereof.

According to an embodiment of the present disclosure, a "module" or a "unit" performs at least one function or operation, and may be implemented in hardware, software, or a combination of hardware and software. In addition, a plurality of "modules" or a plurality of "units" may be integrated into at least one module except for a "module" or a "unit" which has to be implemented with specific hardware, and may be implemented with at least one processor.

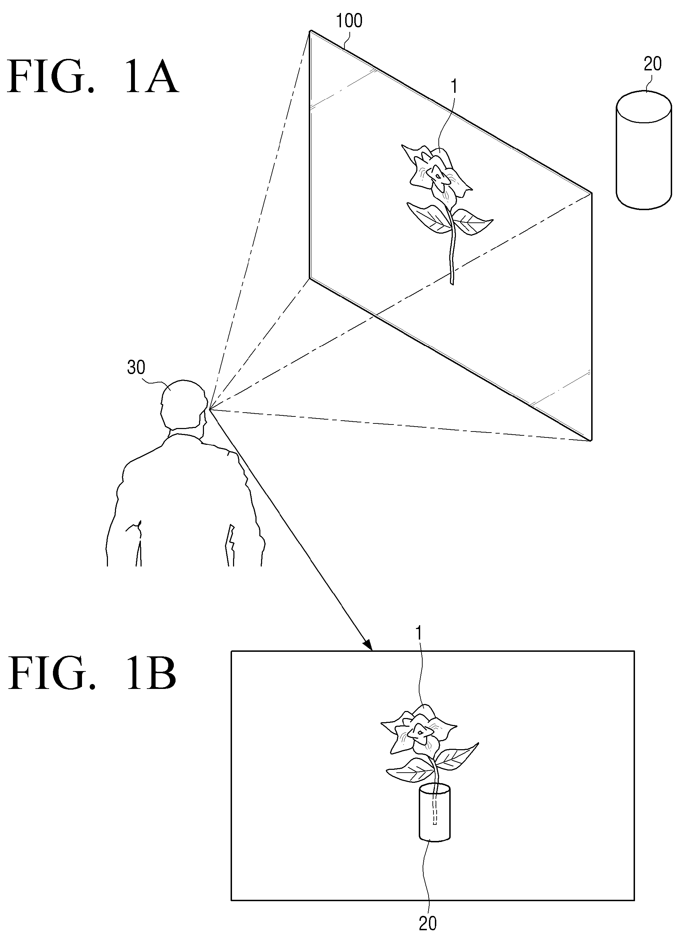

FIGs. 1A and 1B are conceptual diagrams of a display apparatus according to an embodiment of the present disclosure.

Referring to FIG. 1A, a display apparatus 100 includes a transparent display screen in which a rear object 20 is reflected transparently.

Accordingly, as illustrated in FIG. 1B, a graphic object 1 displayed on the display apparatus 100 is viewed by a user 30 along with an actual appearance of the rear object 20.

The display apparatus 100 may be various types of electronic apparatus, for example, a mobile phone, a tablet personal computer (PC), a television (TV), a desktop computer, an MP3 player, a portable multimedia player (PMP), a remote controller, and the like. The display apparatus may be applied to various objects, such as, furniture, a window, a transparent door, a picture frame, a show window, a wall, and the like.

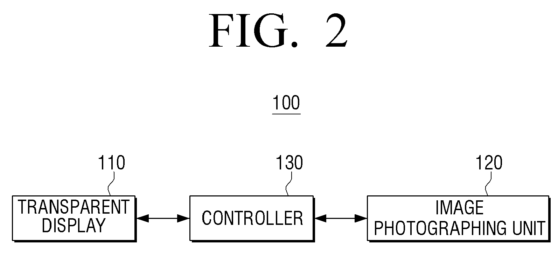

FIG. 2 is a block diagram of a display apparatus according to an embodiment of the present disclosure. Referring to FIG. 2, the display apparatus 100 includes a transparent display 110, an image photographing unit 120, and a controller 130.

The transparent display 110 may display a graphic object in a state where an object located at a rear side is reflected transparently. The graphic object may include an image, a text, an application execution screen, a web browser screen, and the like. The transparent display 110 may display various graphic objects according to the control of the controller 130.

According to an embodiment of the present disclosure, the transparent display 110 may be realized as various types of display, for example, a transparent liquid crystal display (LCD) type display, a transparent thin-film electroluminescent panel (TFEL) type display, a transparent organic light-emitting diode (OLED) type display, a projection type display, and the like.

The transparent LCD type display refers to a transparent display realized by removing a backlight unit from the conventional LCD and employing a pair of polarizing plates, an optical film, a transparent thin film transistor (TFT), a transparent electrode, and the like. In the transparent LCD, transmittance decreases due to the polarizing plates and the optical film, and optical efficiency also decreases as an ambient light is used instead of the backlight unit, but the LCD has the merit of realizing a large-scale transparent display. The transparent TFEL type display refers to an apparatus which uses an alternating current type-inorganic thin film EL display (AC-TFEL) which consists of a transparent electrode, an inorganic fluorescent substance, and an insulation membrane. The AC-TEFL is a display which emits light as an accelerated electron passes inside the inorganic fluorescent substance and excites the fluorescent substance. In case of the transparent TFEL type-transparent display 110, the controller 130 may control the electron to be projected onto a proper position to determine a location for displaying information. The inorganic fluorescent substance and the insulation membrane are transparent, and thus, it is able to realize a very transparent display.

The transparent OLED type display refers to a transparent display using an OLED which may emit light autonomously. As an organic light-emitting layer is transparent, the transparent display 110 may be realized by using transparent electrodes at both sides of the display. The OLED emits light as an electron and a hole are injected from both sides of the organic light-emitting layer and combined in the organic light-emitting layer. The transparent OLED displays information by injecting the electron and the hole at a desired position based on the above-described principle.

The image photographing unit 120 may generate a photographed image by photographing a subject projected from the transparent display 110 according to the control of the controller 130.

The display apparatus 100 may include a plurality of image photographing units 120. According to an embodiment of the present disclosure, the image photographing unit may be disposed on each of a front surface (a display direction) and a rear surface of the transparent display 110. The image photographing unit on the front surface may be used for photographing a user, and the image photographing unit on the rear surface may be used for photographing a subject.

The controller 130 controls overall operations of the display apparatus 100.

In response to a predetermined event occurring, the controller 130 may interrupt displaying of a particular graphic object displayed on the transparent display 110 or display a new graphic object.

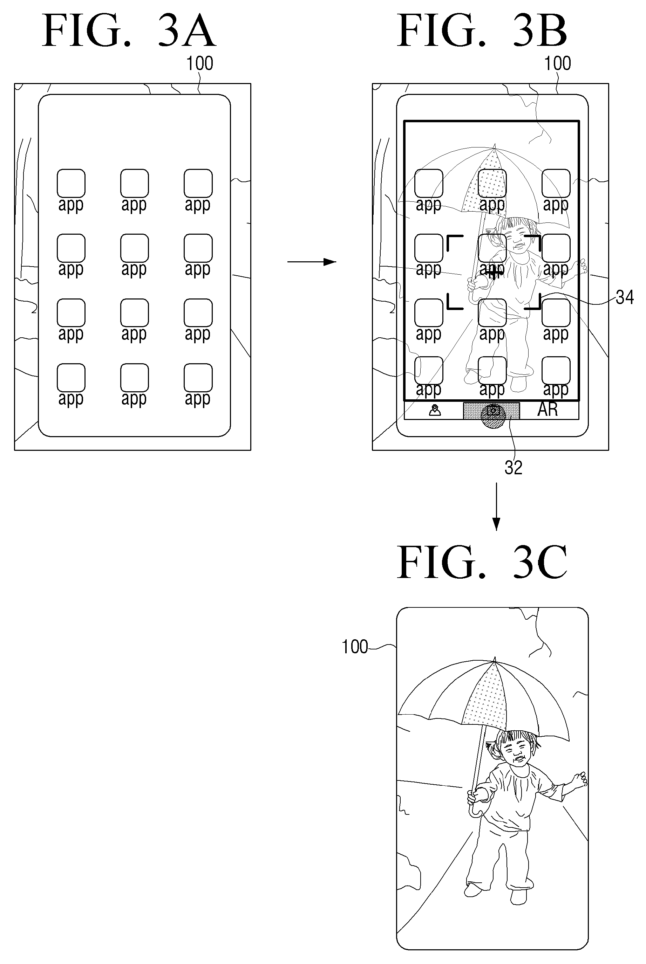

As an example, in response to a predetermined event occurring while a home screen (initial screen) is displayed, a graphic object for controlling the image photographing unit 120 may be displayed. The controller 130 may drive the image photographing unit 120 and generate a photographed image according to a user's input with respect to the graphic object for controlling the image photographing unit 120. This embodiment will be described below in greater detail with reference to FIG. 3.

FIGs. 3A-3C are views to describe an operation of changing a mode of a display apparatus according to an embodiment of the present disclosure.

In response to a predetermined event occurring while the home screen is displayed as illustrated in FIG. 3A, the transparency of graphic objects displayed on the home screen increases as in FIG. 3B (that is, the graphic objects become transparent such that a subject facing the rear display is shown more clearly), and a graphic object for informing the user that the display apparatus 100 is entering a photographing mode may be displayed. For example, as illustrated in FIG. 3B, a photographing focus object 34 and a photographing object 32 may be displayed. In response to the photographing object 32 being selected, the controller 130 drives the image photographing unit 120 to photograph the subject and generate a photographed image of the subject. Upon completion of the photographing operation, the controller 130 may display the photographed image on the transparent display 110 as illustrated in FIG. 3C.

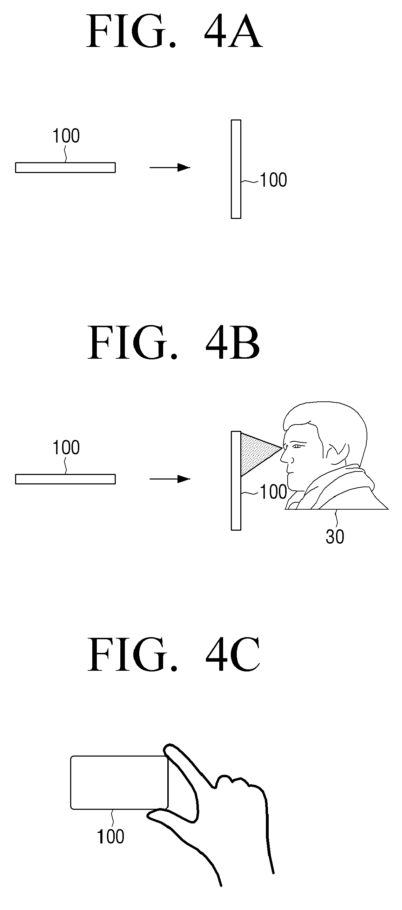

FIGs. 4A-4C are views to describe an occurrence of an event for changing a mode according to various embodiments of the present disclosure.

In this case, the predetermined event is a user input. For example, the predetermined event may be an event where a particular motion of the display apparatus 100 is sensed. The particular motion may include a motion of standing the display apparatus 100 upright, as an example, as illustrated in FIG. 4A. As another example, the predetermined event may be a particular motion including a motion of shaking the display apparatus 100.

When the display apparatus 100 enters the photographing mode only by the particular motion of the display apparatus 100, a mode of the display apparatus 100 may be changed to the photographing mode even when not desired by the user. In order to avoid this problem, as illustrated in FIG. 4B, the display apparatus 100 may enter the photographing mode only when a user's gaze 30 is sensed along with the particular motion of the display apparatus 100. Alternatively, the display apparatus 100 may enter the photographing mode in response to a pressure applied to a particular part (e.g., edge) of the display apparatus 100, as illustrated in FIG. 4C, instead of the particular motion of the display apparatus 100. In addition, the display apparatus 100 may enter the photographing mode only when the particular motion of the display apparatus 100 is sensed while pressure is applied to a particular part of the display apparatus 100.

According to the above-described embodiments, the display apparatus 100 may enter the photographing mode from the home screen quickly, without complicated user input for executing a camera function, thereby enhancing user convenience.

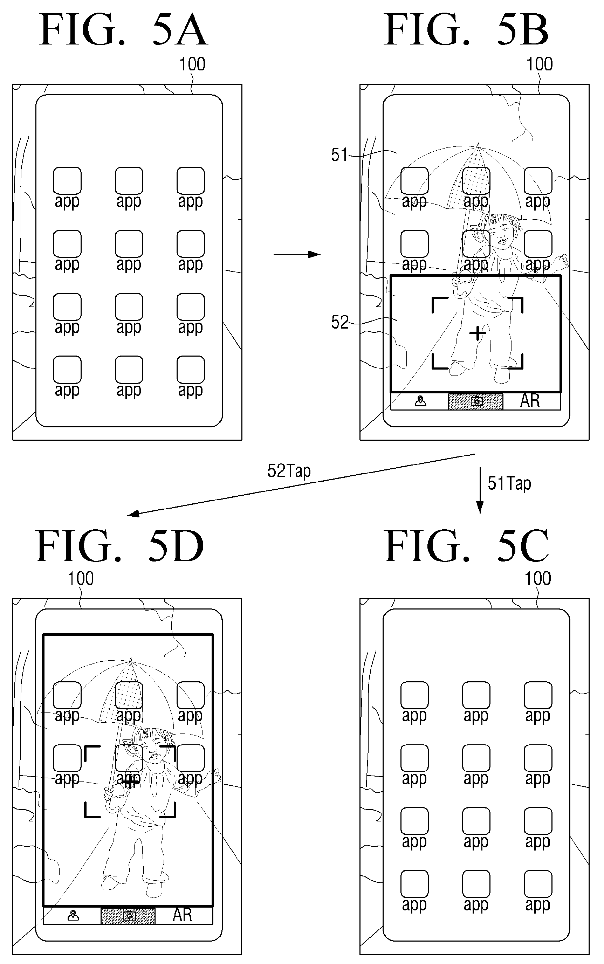

According to another embodiment of the present disclosure, the display apparatus 100 may enter the photographing mode only when an additional user input is received along with the occurrence of the predetermined event. This embodiment will be described below in greater detail with reference to FIGs. 5A-5D.

FIGs 5A-5D are views to describe an occurrence of an event for changing a mode according to various embodiments of the present disclosure

In response to a predetermined event occurring while the home screen is displayed as illustrated in FIG. 5A, a photographing preparation object 52 may be displayed as in FIG. 5B. The photographing preparation object 52 informs the user that the display apparatus 100 is preparing to enter the photographing mode. In this case, a display operation for an icon in the home screen may be interrupted, and the photographing preparation object 52 may be displayed instead. Subsequently, in response to an area 51 other than the photographing preparation object 52 being selected by the user, the home screen may be displayed again as illustrated in FIG. 5C. In response to the photographing preparation object 52 being selected by the user, the display apparatus 100 enters the photographing mode as illustrated in FIG. 5D. Subsequently, in response to the photographing preparation object 52 being selected, the controller 130 may drive the image photographing unit 120 to photograph the subject and generate a photographed image of the subject.

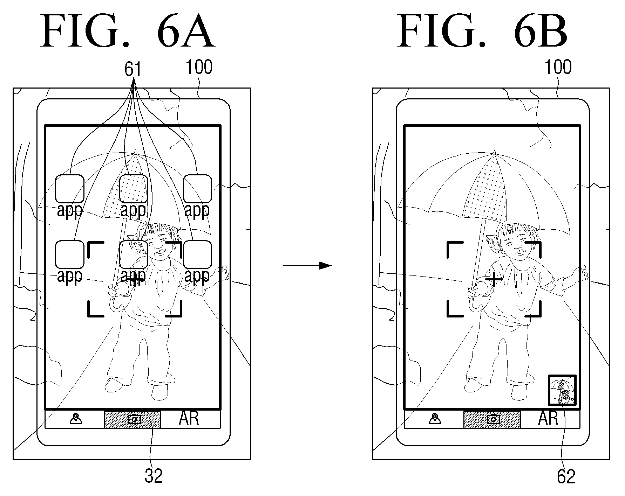

According to another embodiment of the present disclosure, after the display apparatus 100 enters the photographing mode and a first photographing operation is performed, the controller 130 removes the icons from the home screen such that a second photographing operation is performed in a clear screen since the controller 130 determines that execution of the first photographing operation represents a user's input request of photographing an image. This embodiment will be described below in greater detail with reference to FIGs. 6A-6B.

FIGs. 6A-6B are views to describe an operation of changing an image photographing screen of a display apparatus according to an embodiment of the present disclosure.

Referring to FIG. 6, in response to the first photographing operation being performed as the display apparatus 100 entered the photographing mode and the photographing object 32 was selected as illustrated in FIG. 6A, the controller 130 may remove the icons 61 displayed on the screen and display only menus related to the photographing operation as illustrated in FIG. B. Accordingly, the user may view the subject through the clear screen when performing the second photographing operation. In this case, the photographed image obtained in the first photographing operation may be checked by selecting a photographed image view object 62.

The display apparatus 100 may perform other various functions in addition to the above-described photographing function.

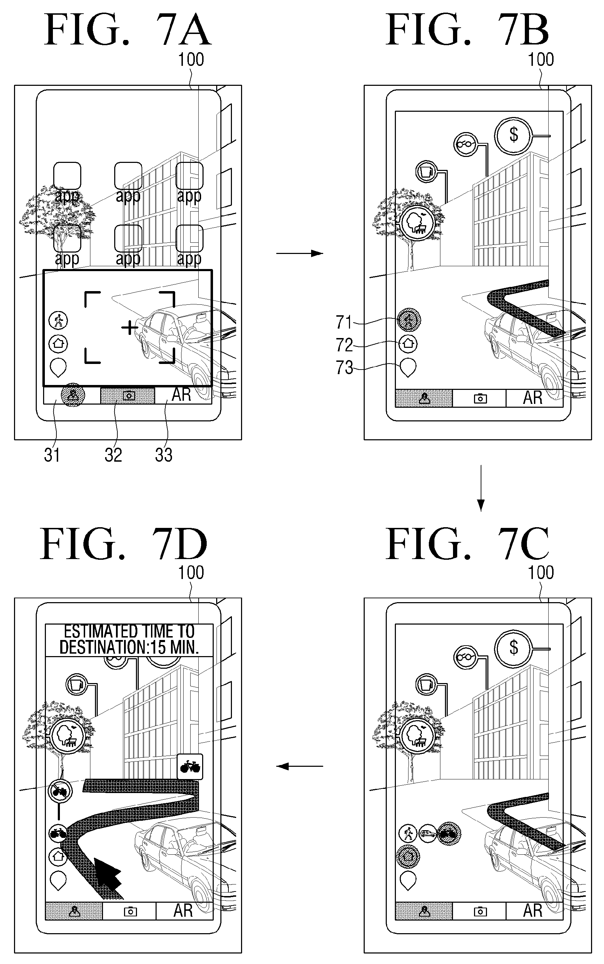

FIGs. 7A-7D are views to describe a map function of the display apparatus according to an embodiment of the present disclosure.

In response to the predetermined event occurring, as illustrated in FIG. 7A, a map object 31, the photographing object 32, and an augmented reality (AR) object 33 may be displayed on the transparent display 110. In response to the map object 31 being selected, information on a building which is projected onto the transparent display 110 may be displayed as illustrated in FIG. 7B. The map function also provides various sub-functions, for example, informing of a pedestrian passage, informing of a bicycle road, and informing of an automobile road. In response to a route search object 71 being dragged, the user may select one of the sub-functions as illustrated in FIG. 7C. In addition, in response to a guide-to-home object 72 being selected in the map function, directions to a pre-stored home address starts. In response to a destination-set object 73 being selected, the user may set a new destination. When the function of informing of a bicycle road has been set, and the guide-to-home object 72 is selected, an available route that the user is able to go home using the bicycle is displayed as illustrated in FIG. 7D.

According to the above-described embodiment, the user may be provided with directions through the transparent display 110 viewing an appearance of an actual building or a road, and thus, the user's understanding of directions may be enhanced

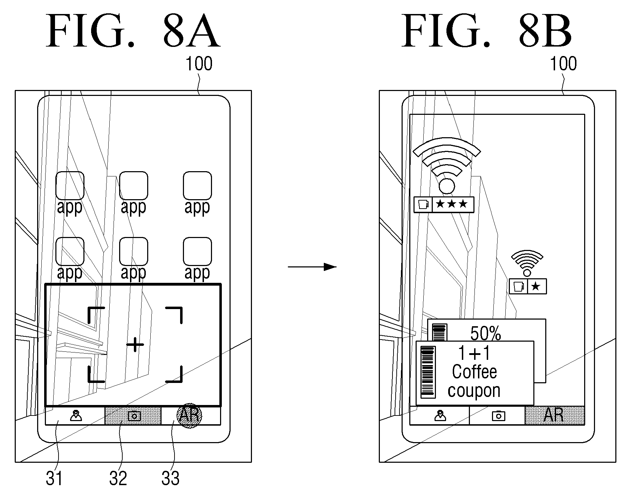

FIGs. 8A-8B are views to describe an augmented reality (AR) function of a display apparatus according to an embodiment of the present disclosure.

In response to the predetermined event occurring, the map object 31, the photographing object 32, and the AR object 33 may be displayed on the transparent display 110 as illustrated in FIG. 8A. In response to the AR object 33 being selected, the user may obtain various information on the building displayed through the transparent display 110. For example, as illustrated in FIG. 8B, the user may be provided with various information, such as, a coupon provided by a cafe, the user's reward points and related coupons, a Wireless-Fidelity (Wi-Fi) status, a user review, and the like.

According to the above-described embodiment, the user may obtain various information on a desired shop simply by having the shop being reflected on the display apparatus 100 and may be provided with an AR experience.

In the transparent display 110, an object in a frame of the transparent display 110 may be used as a photographing preview without change. The photographing preview enables a user to check an image to be photographed in advance of performing a photographing operation. In the conventional apparatus, the photographing preview may be displayed on a display only after the image photographing unit is driven. In this regard, the display apparatus 100 may reduce the power consumption and latency of viewing as compared with the conventional apparatus. However, in this case, a photographed image generated after execution of the photographing operation of the image photographing unit 120 may not correspond to an object that the user viewed through the transparent display 110. Accordingly, the photographed image needs to be generated as the user views through the transparent display 110.

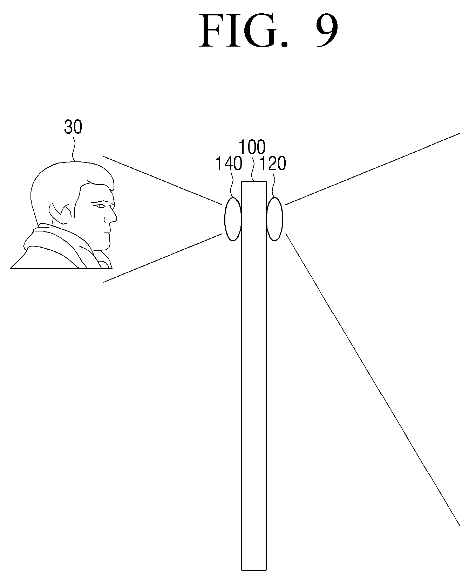

According to an embodiment of the present disclosure, the display apparatus 100 may generate a final photographed image among photographed images generated by the image photographing unit 120 by using an area corresponding to a user's viewpoint. This embodiment will be described below in greater detail with reference to FIGs. 9 to 11.

FIGs. 9, 10A-10D and 11A-11C are views to describe an operation of generating a photographed image of the display apparatus 100.

Referring to FIG. 9, the display apparatus 100 recognizes a location of a user's face and a user's gaze. The display apparatus 100 may include a sensor 140 disposed in a display direction of the transparent display 110 and the image photographing unit 120 disposed in an opposite direction of the display direction.

The controller 130 detects an area corresponding to the user's viewpoint from an image photographed by the image photographing unit 120 based on the location of the user's face and the user's gaze recognized by the sensor 140 and generates a final photographed image by using the detected area.

The sensor 140 may recognize the location of a face of the user 30 by detecting the user's face and calculate a distance between the user's face and the display apparatus 100 based on the recognized size. In addition, the sensor 140 may recognize the user's gaze. The sensor 140 may be realized as an image sensor, an infrared sensor, an ultrasonic sensor, a proximity sensor, and the like, for example.

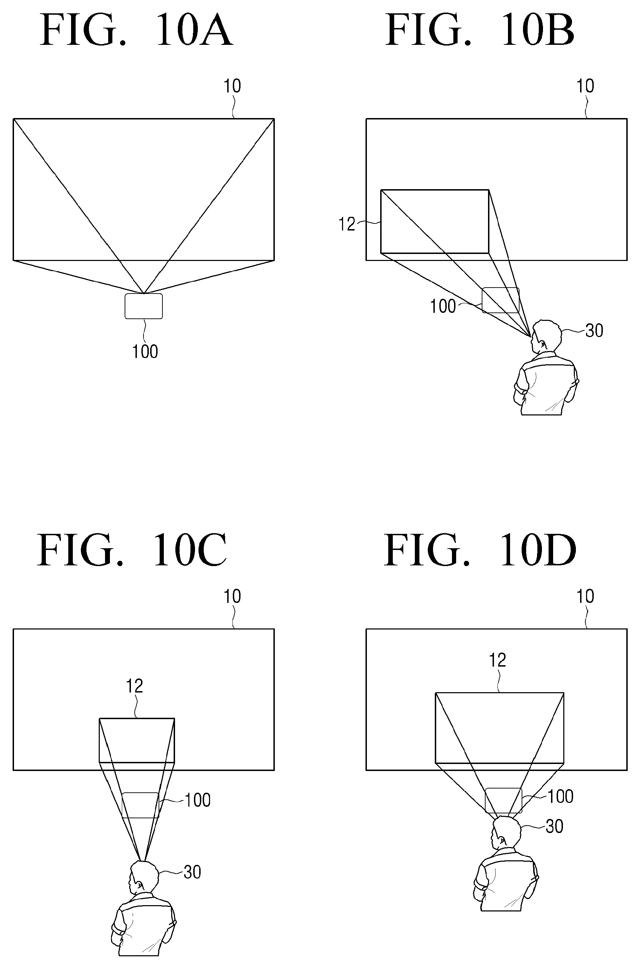

Referring to FIGs. 10A-10D, FIG. 10A illustrates an area 10 that the image photographing unit 120 may photograph actually. The controller 130 may generate only a part of the area 10 as a photographed image based on the location of the user's face and the user's gaze recognized by the sensor 140. For example, as illustrated in FIGs. 10B-10D, the image photographing unit 120 may generate only an area 12 corresponding to the user's gaze out of the photographable area 10 as the photographed image.

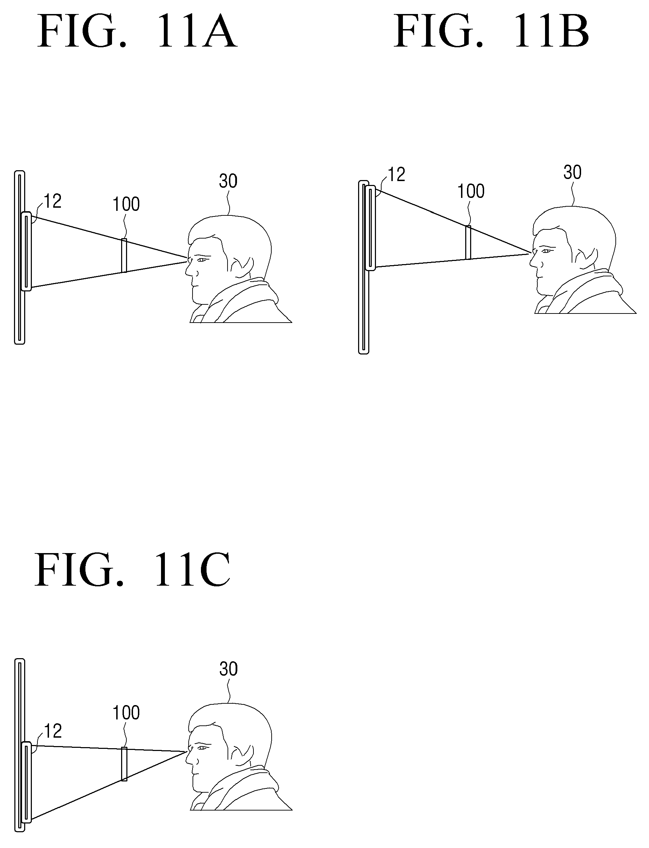

The user may change only a gaze at the same location. Accordingly, a point that the user gazes through the transparent display 110 may vary at the same location. That is, as illustrated in FIGs. 11A-11C, although a distance between the user 30 and the display apparatus 100 is constant, a point that the user gazes through the transparent display 110 varies depending upon the user's gaze. Accordingly, the display apparatus 100 needs to generate a photographed image of the area 12 corresponding to the user's gaze, that is, the area corresponding to the point that the user actually gazes. In this regard, the controller 130 generates the photographed image based on the user's gaze as well as the location of the user's face recognized by the sensor 140. According to an embodiment of the present disclosure, the display apparatus may remove an error which may occur when a photographed image is generated based on only the location of the user's face.

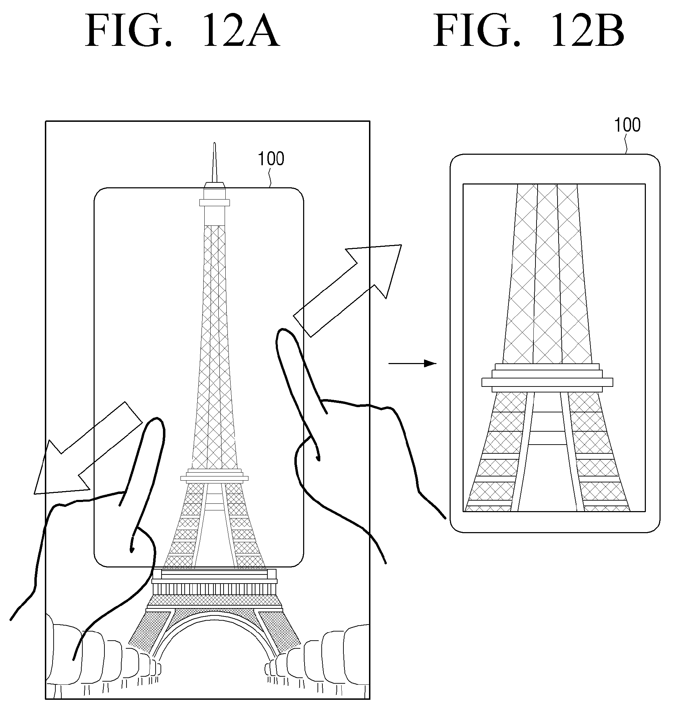

FIGs. 12A-12B are views to describe an operation of generating a photographed image of the display apparatus 100 according to another embodiment of the present disclosure.

As illustrated in FIG. 12A, in response to a user's input for zooming in or out of the subject projected on the transparent display 110, the display apparatus 100 may generate a photographed image where the subject has been enlarged or reduced, by driving the image photographing unit 120 according to the received user's input and display the photographed image on the transparent display 110 as illustrated in FIG. 12B. The user's input may be through an input unit of the display apparatus 100. According to an embodiment of the present disclosure, the input unit may be realized as a touch screen in which a touch sensor is embedded. In this case, an input for zooming out a subject may be putting fingers together on a touch screen (pinch-in), and an input for zooming in a subject may be spreading out fingers on the touch screen (pinch-out).

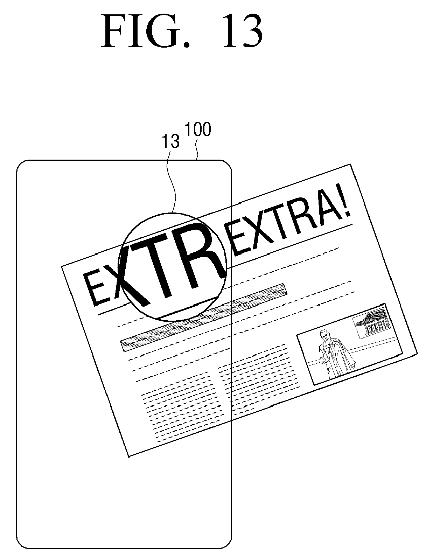

FIG. 13 is a view to describe a magnifying glass function of the display apparatus 100 according to an embodiment of the present disclosure.

Referring to FIG. 13, the controller 130 may control the image photographing unit 120 to generate a photographed image in which an object projected through a magnifying glass area 13 has been enlarged and display the generated photographed image in the transparent display 110. The magnifying glass area 13 may have been activated since the display apparatus 100 was turned on and may be inactivated according to a user setting.

According to an embodiment of the present disclosure, the display apparatus 100 may obtain an actual image of a projected object and an image in which a certain part of the object has been enlarged by utilizing the transparency of the transparent display 110. Accordingly, the user may be provided with an magnifying function similar to an actual magnifying glass.

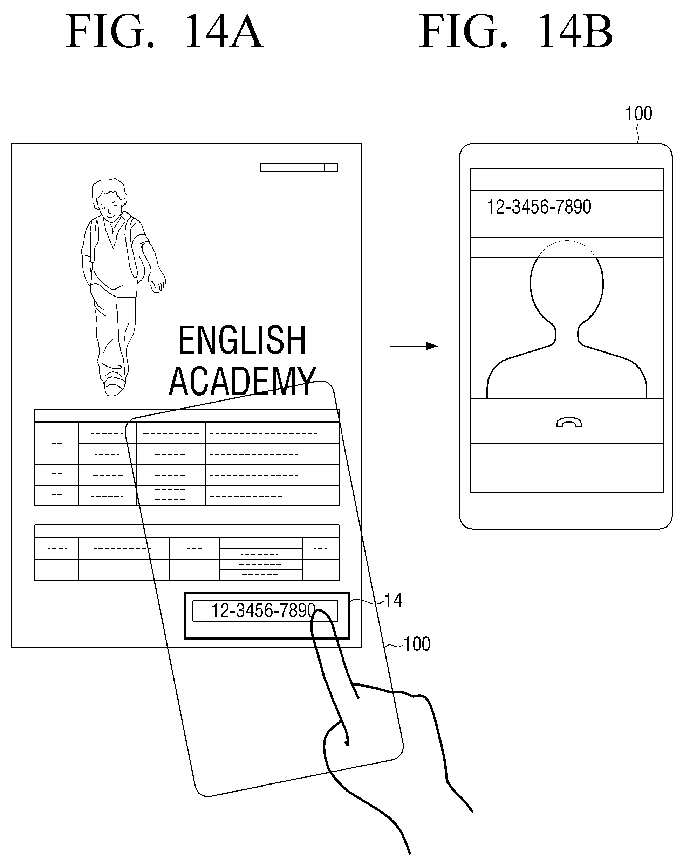

FIGs. 14A-14B are views to describe a telephone number recognition function of the display apparatus 100 according to an embodiment of the present disclosure.

Referring to FIGs. 14A-14B, in response to the display apparatus 100 being placed in view of a document where a phone number is shown, the controller 130 recognizes the phone number from an image photographed by the image photographing unit 120. In this case, a phone number-recognition object 14 may be displayed on a recognized phone number area. In response to the phone number-recognition object 14 being selected by the user, a phone call may be made to the phone number.

The controller 130 recognizes a phone number in the above embodiment, but this is only an example and the controller 130 may recognize various objects. For example, the controller 130 may recognize a website address and display a web page screen of the website or recognize an account number and display a money transfer screen for the account number.

According to another embodiment of the present disclosure, the display apparatus 100 may synthesize an image generated by the image photographing unit 120 and a particular graphic object displayed on the transparent display 110.

The transparent display 110, may display a plurality of graphic objects, and in response to a predetermined event occurring, may interrupt displaying the graphic objects except for a predetermined graphic object among the plurality of displayed graphic objects. In this case, the predetermined event may be an event where a predetermined motion of the display apparatus 100 is sensed or an event where pressure applied to a particular part of the display apparatus 100 is sensed, as described above.

In response to the user gazing at the transparent display 110 while only the predetermined graphic object is displayed, the rear object and the predetermined graphic object displayed on the transparent display 110 may be shown, as described above with reference to FIG. 1. The controller 130 may generate an image by using an overall shape of the rear object and the predetermined graphic object displayed on the transparent display 110. That is, the controller 130 may synthesize the photographed image generated by the image photographing unit 120 and the predetermined graphic object displayed on the transparent display 110.

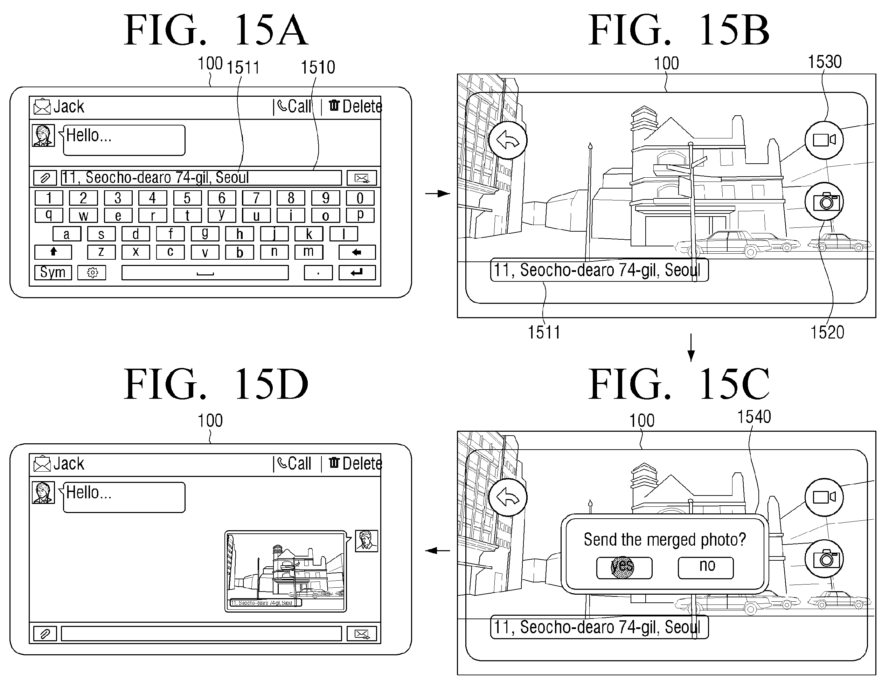

In this case, the predetermined graphic object is determined depending on a status of the screen being displayed. A detailed description on a graphic object used for a synthesizing operation will be provided below with reference to FIGs. 15A-15D, 16A-16B, 17A-17B, 18A-18C, 19A-19B, and 20A-20B.

FIGs. 15A-15D, 16A-16B, 17A-17B, 18A-18C, 19A-19B, and 20A-20B are views to describe an operation of generating a synthetic image of a display apparatus according to various embodiments of the present disclosure.

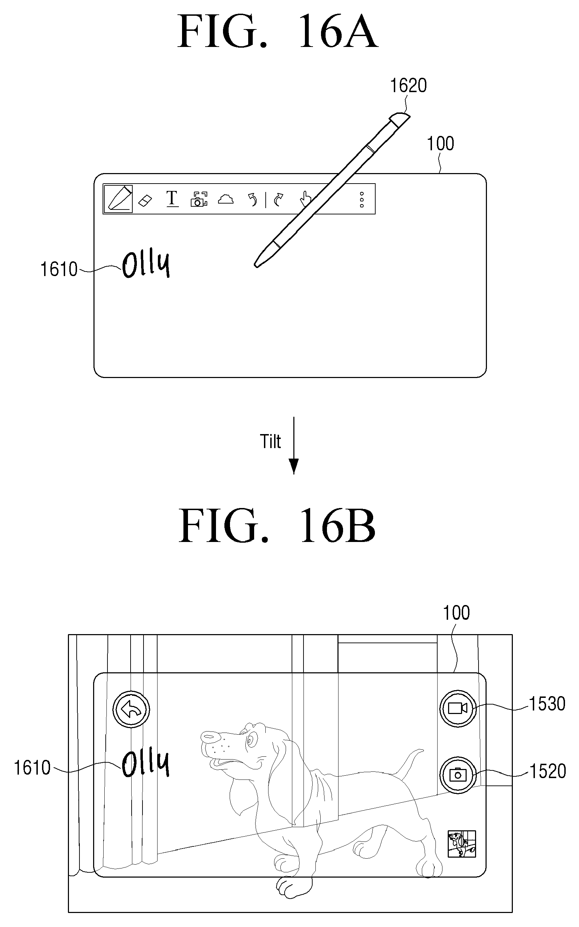

In particular, FIGs. 15A-15D, 16A-16B, 17A-17B, 18A-18C, 19A-19B, and 20A-20B are views to describe an operation of synthesizing a content inputted by a user and a photographed image. In this case, the content inputted by the user may be text, an image, and the like. FIGs. 15A-15D is a view to describe a case where content inputted by a user is text, and FIG. 16 is a view to describe a case where a content inputted by a user is an image.

Referring to FIG. 15A, a user may input text into the display apparatus 100. In response to the predetermined event occurring while the text inputted by the user is displayed as a text object 1511 in a message input box 1510, the transparent display 110 interrupts displaying the graphic objects except for the text object 1511 as illustrated in FIG. 15B. Subsequently, a subject located at the rear side of the display apparatus 100 is reflected transparently as illustrated in FIG. 15B and shown along with the text object 1511. As illustrated in FIG. 15B, graphic objects 1520 and 1530, which are related to the function control of the image photographing unit 120 are displayed on the transparent display 110.

In this case, the predetermined event may be an event where a particular motion of the display apparatus 100 is sensed. For example, the predetermined event may be where a user's motion of raising the display apparatus 100 at a particular angle or a user's motion of shaking the display apparatus 100 is sensed. In addition, the predetermined event may be where a user's gaze is sensed along with the particular motion. The predetermined event may be also where pressure is applied to a particular part of the display apparatus 100. The particular part of the display apparatus 100 may be an edge or a bezel of the display apparatus 100. The pressure may be applied by a user of the display apparatus 100. In addition, the predetermined event may be where pressure is applied along with a particular motion, but is not limited thereto. The predetermined event may be where various types of user input is sensed, for example, where a soft button displayed through the transparent display 110 is selected, where a physical button disposed on the display apparatus 100 is selected, and the like.

In response to a camera object 1520 or a video object 1530 being selected in this state, the controller 130 photographs the subject by using the image photographing unit 120 and synthesizes a photographed image of the subject and the text object 1511. In response to the camera object 1520 being selected, the controller 130 may generate a synthetic image of a still image and the text object 1511. In response to the video object 1530 being selected, the controller 130 may generate a synthetic image of a video and the text object 1511. The synthetic image is stored in a storage of the display apparatus 100.

According to an embodiment of the present disclosure, in response to the above-described operations being performed while a chat session is executed, a synthetic image may be transmitted to the other party immediately. For example, upon completion of the synthesizing operation, a pop-up window 1540 for inquiring whether to transmit a synthetic image is displayed as illustrated in FIG. 15C. In response to 'No' being selected by the user, a screen returns to the screen in FIG. 15D. In response to 'Yes' being selected by the user, the synthetic image is transmitted to the other party as illustrated in FIG. 15D.

According to an embodiment of the present disclosure, in response to the display apparatus 100 being shaken while the user inputs the text, the inputted text may be extracted and synthesized with a photographed image. Further, when the text is inputted through the chat session, the user may transmit the synthetic image to the other party immediately.

FIGs. 16A-16B are views to describe a method of generating a synthetic image according to another embodiment of the present disclosure. Hereinafter, an operation of using an image inputted by a user in generating a synthetic image will be described with reference to FIG. 16.

Referring to FIG. 16A, the user may input an image into the display apparatus 100 by using an input means. For example, in the case of the display apparatus 100 including a touch screen, the input means may be a pen 1620 with which to perform a touch input. In response to the predetermined event occurring while the image inputted by the user is displayed as an image object 1610, the transparent display 110 interrupts displaying the graphic objects except for the image object 1610 as illustrated in FIG. 16B. Consequently, a subject located at the rear side of the display apparatus 100 is reflected transparently as illustrated in FIG. 16B and shown along with the image object 1611. As illustrated in FIG. 16B, the graphic objects 1520 and 1530 related to the function control of the image photographing unit 120 are displayed on the transparent display 110.

In this case, the predetermined event may be an event where a particular motion of the display apparatus 100 is sensed. For example, the predetermined event may be an event where a user's motion of raising the display apparatus 100 at a particular angle or a user's motion of shaking the display apparatus 100 is sensed. In addition, the predetermined event may be an event where a user's gaze is sensed along with the particular motion. The predetermined event may be also an event where pressure is applied to a particular part of the display apparatus 100. The particular part of the display apparatus 100 may be an edge or a bezel of the display apparatus 100. In addition, the predetermined event may be an event where pressure is applied along with a particular motion, but is not limited thereto. The predetermined event may be an event where various types of user input is sensed, for example, where a soft button displayed through the transparent display 110 is selected, where a physical button disposed on the display apparatus 100 is selected, and the like.

In response to the camera object 1520 or the video object 1530 being selected in this state, the controller 130 photographs the subject by using the image photographing unit 120 and synthesizes a photographed image of the subject and the image object 1610. In response to the camera object 1520 being selected, the controller 130 may generate a synthetic image of a still image and the image object 1610. In response to the video object 1530 being selected, the controller 130 may generate a synthetic image of a video and the image object 1610. The synthetic image is stored in the storage of the display apparatus 100.

In FIGs. 15 and 16, the text or image object inputted by the user for generating a synthetic image is not changed, but the user may edit the text or image object before performing a photographing operation. That is, the user may erase a part of the text in the text object 1511 or input additional text in the state as in FIG. 15B. In addition, the user may move a display location of the text object 1511 or change a design of the text object 1511. In the same manner, the user may erase the image object 1610 or input an additional image by using the pen 1620 as in FIG. 16B. In addition, the user may move a display location of the image object 1610 or change a design of the image object 1610. In response to the photographing operation being performed in the state where the editing operation has been performed, the controller 130 synthesizes the edited text object or image object with the photographed image.

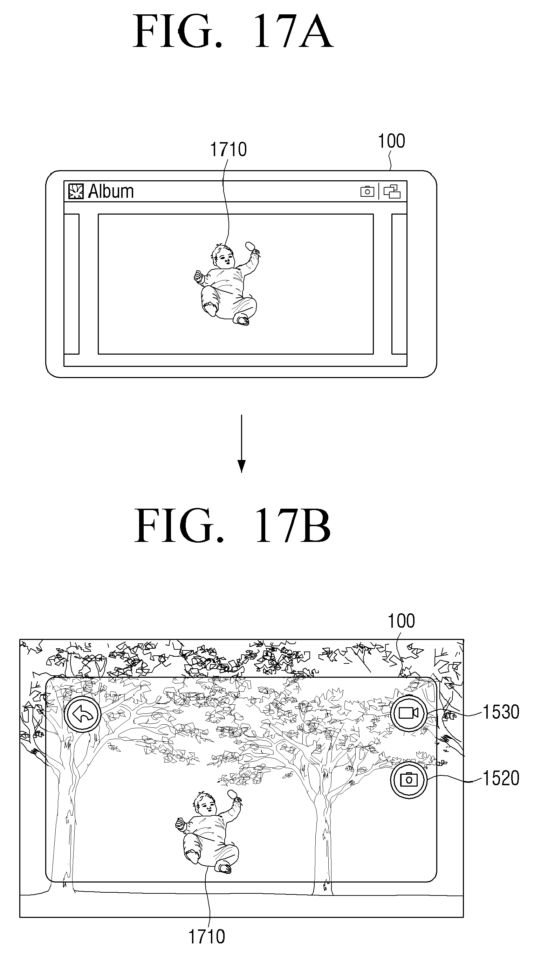

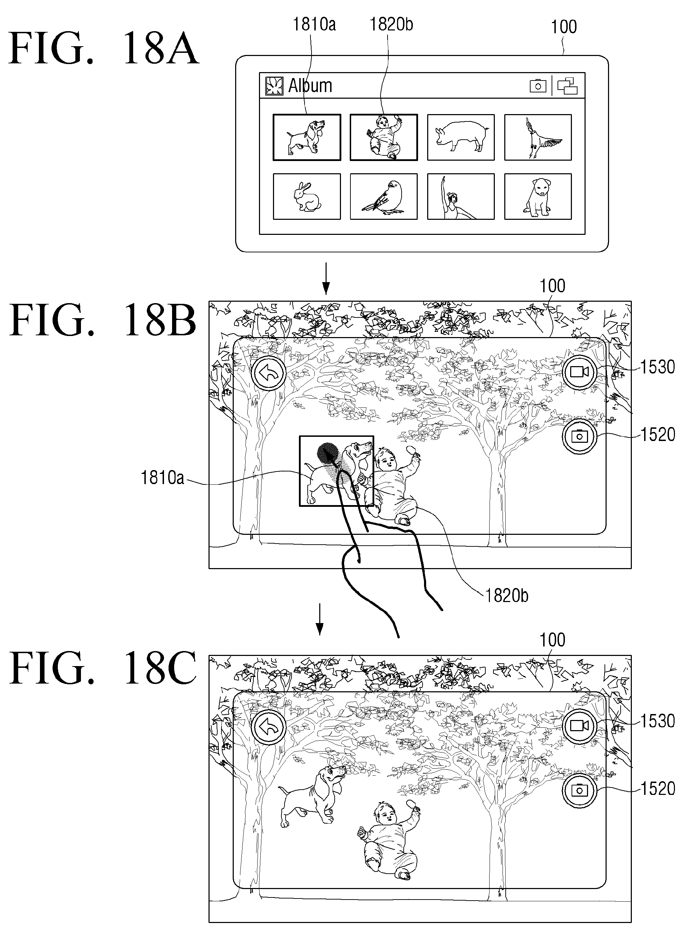

According to another embodiment of the present disclosure, the content stored in the display apparatus 100 may be used for generating a synthetic image. This embodiment will be described below in greater detail with reference to FIGs. 17-17B and 18A-18C. The content refers to information which may be outputted through the display apparatus 100 and may include a text, a picture, a video, music content, and the like.

Referring to FIG. 17A, a content 1710 selected by a user may be displayed on the transparent display 110. As an example, the content 1710 selected by the user may be an image content provided by an album application. In response to the predetermined event occurring while the content 1710 selected by the user is displayed, the transparent display 110 interrupts displaying the graphic objects except for the selected content 1710 as illustrated in FIG. 17B.

In this case, the content 1710 selected by the user may be displayed by maintaining its original form, or only a subject (a baby) may be displayed without a background as illustrated in FIG. 17B.

Subsequently, the subject located at the rear side of the display apparatus 100 is reflected transparently as illustrated in FIG. 17B and shown along with the selected content 1710. As illustrated in FIG. 17B, the graphic objects 1520 and 1530 related to the function control of the image photographing unit 120 are displayed on the transparent display 110.

In this case, the predetermined event may be an event where a particular motion of the display apparatus 100 is sensed. For example, the predetermined event may be an event where a user's motion of raising the display apparatus 100 at a particular angle or a user's motion of shaking the display apparatus 100 is sensed. In addition, the predetermined event may be an event where a user's gaze is sensed along with the particular motion. The predetermined event may be also an event where pressure is applied to a particular part of the display apparatus 100. The particular part of the display apparatus 100 may be an edge or a bezel of the display apparatus 100. In addition, the predetermined event may be an event where pressure is applied along with a particular motion, but is not limited thereto. The predetermined event may be where various types of user input is sensed, for example, where a soft button displayed through the transparent display 110 is selected, where a physical button disposed on the display apparatus 100 is selected, and the like.

In response to the camera object 1520 or the video object 1530 being selected in this state, the controller 130 photographs the subject by using the image photographing unit 120 and synthesizes a photographed image of the subject and the selected content 1710. In response to the camera object 1520 being selected, the controller 130 may generate a synthetic image of a still image and the selected content 1710. In response to the video object 1530 being selected, the controller 130 may generate a synthetic image of a video and the selected content 1710. The synthetic image is stored in the storage of the display apparatus 100.

FIGs. 18A-18C are views to describe an embodiment of synthesizing a plurality of selected content with a photographed image.

In response to the predetermined event occurring while a plurality of content 1810 and 1810b are selected, the transparent display 110 interrupts displaying the graphic objects except for the plurality of selected contents 1810a and 1810b as illustrated in FIG. 18A. Subsequently, the subject located at the rear side of the display apparatus 100 is reflected transparently as illustrated in FIG. 18B and shown along with the plurality of selected contents 1810a and 1810b. As illustrated in FIG. 18B, the graphic objects 1520 and 1530 related to the function control of the image photographing unit 120 are displayed on the transparent display 110.

In this case, the predetermined event may be an event where a particular motion of the display apparatus 100 is sensed. For example, the predetermined event may be an event where a user's motion of raising the display apparatus 100 at a particular angle or a user's motion of shaking the display apparatus 100 is sensed. In addition, the predetermined event may be an event where a user's gaze is sensed along with the particular motion. The predetermined event may be also an event where pressure is applied to a particular part of the display apparatus 100. The particular part of the display apparatus 100 may be an edge or a bezel of the display apparatus 100. In addition, the predetermined event may be an event where pressure is applied along with a particular motion, but is not limited thereto. The predetermined event may be an event where various types of user input is sensed, for example, where a soft button displayed through the transparent display 110 is selected, where a physical button disposed on the display apparatus 100 is selected, and the like.

Meanwhile, a display location of the selected content may be changed. As illustrated in FIG. 18B, the user may move the puppy object 1810a so as not to overlap the baby object 1810b.

In response to the camera object 1520 or the video object 1530 being selected in this state, the controller 130 photographs the subject by using the image photographing unit 120 and synthesizes a photographed image of the subject and the plurality of contents 1810a and 1810b. In response to the camera object 1520 being selected, the controller 130 may generate a synthetic image of a still image and the plurality of contents 1810a and 1810b. In response to the video object 1530 being selected, the controller 130 may generate a synthetic image of a video and the plurality of contents 1810a and 1810b. The synthetic image is stored in the storage of the display apparatus 100.

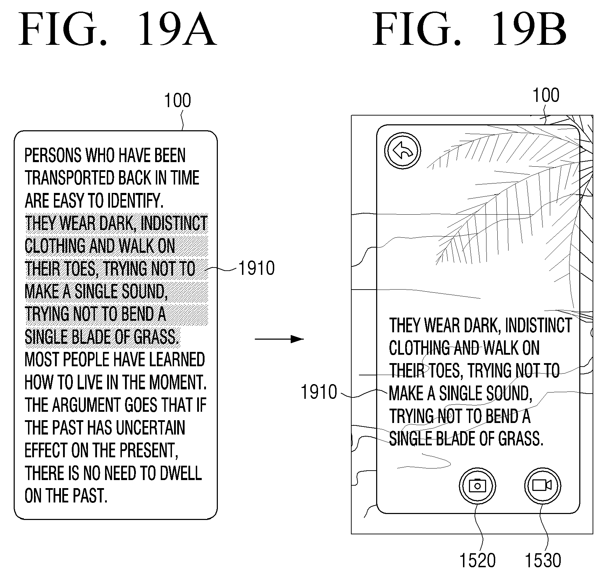

According to another embodiment of the present disclosure, text selected by a user may be used for a synthesizing operation. This embodiment will be described below in greater detail with reference to FIGs. 19A-19B.

Referring to FIG. 19A, the user may select a part of text displayed on the transparent display 110. For example, the user may select text by using a drag input while an E-book or a web page is displayed. In response to the predetermined event occurring while a text 1910 is selected, the transparent display 110 interrupts displaying the graphic objects except for the selected text 1910. That is, the transparent display 110 interrupts displaying the other graphic objects and the unselected text. Accordingly, the subject located at the rear side of the display apparatus 100 is reflected transparently as illustrated in FIG. 19B and shown along with the selected text 1910. As illustrated in FIG. 19B, the graphic objects 1520 and 1530 related to the function control of the image photographing unit 120 are displayed on the transparent display 110.

In this case, the predetermined event may be an event where a particular motion of the display apparatus 100 is sensed. For example, the predetermined event may be where a user's motion of raising the display apparatus 100 at a particular angle or a user's motion of shaking the display apparatus 100 is sensed. In addition, the predetermined event may be where a user's gaze is sensed along with the particular motion. The predetermined event may also be where pressure is applied to a particular part of the display apparatus 100. The particular part of the display apparatus 100 may be an edge or a bezel of the display apparatus 100. In addition, the predetermined event may be where pressure is applied along with a particular motion, but is not limited thereto. The predetermined event may be where various types of user input is sensed, for example, an event where a soft button displayed through the transparent display 110 is selected, an event where a physical button disposed on the display apparatus 100 is selected, and the like.

In the state as in FIG. 19B, the user may erase a part of the selected text 1910 or input additional text. In addition, the user may move a display location of the selected text 1910 or change a design of the selected text 1910.

In response to the camera object 1520 or the video object 1530 being selected in this state, the controller 130 photographs the subject by using the image photographing unit 120 and synthesizes a photographed image of the subject and the selected text 1910. In response to the camera object 1520 being selected, the controller 130 may generate a synthetic image of a still image and the selected text 1910. In response to the video object 1530 being selected, the controller 130 may generate a synthetic image of a video and the selected text 1910. The synthetic image is stored in the storage of the display apparatus 100.

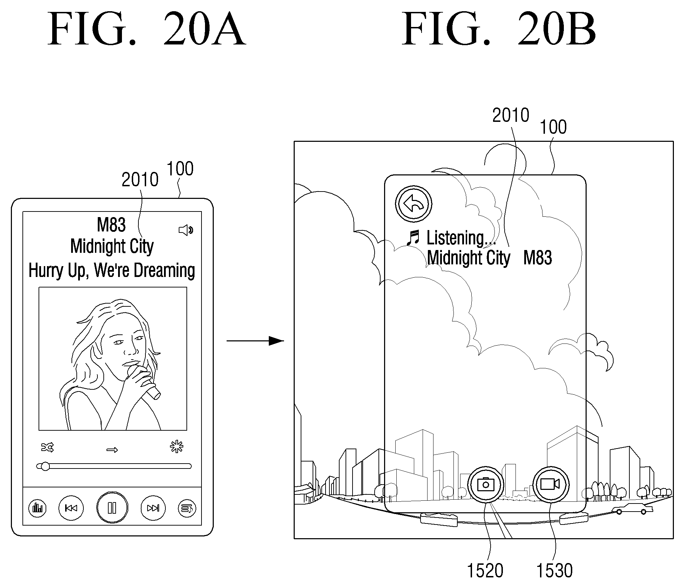

According to an embodiment of the present disclosure, the above-described synthesizing operation may be performed while music is reproduced through the display apparatus 100. This embodiment will be described below in greater detail with reference to FIGs. 20A-20B.

Referring to FIG. 20A, the display apparatus 100 may display a music reproduction screen as illustrated in FIG. 20A while reproducing music. The music reproduction screen may include various information on the music. For example, the music reproduction screen may display a title of the music. In response to the predetermined event occurring while the music is reproduced through the display apparatus 100, the transparent display 110 interrupts displaying the graphic objects except for the information on the reproduced music 2010 as illustrated in FIG. 20B. Accordingly, as illustrated in FIG. 20B, the graphic objects 1520, 1530 related to the function control of the image photographing unit 120 may be displayed on the transparent display 110.

In this case, the predetermined event may be an event where a particular motion of the display apparatus 100 is sensed. For example, the predetermined event may be an event where a user's motion of raising the display apparatus 100 at a particular angle or a user's motion of shaking the display apparatus 100 is sensed. In addition, the predetermined event may be where a user's gaze is sensed along with the particular motion. The predetermined event may also be where pressure is applied to a particular part of the display apparatus 100. The particular part of the display apparatus 100 may be an edge or a bezel of the display apparatus 100. In addition, the predetermined event may be where pressure is applied along with a particular motion, but is not limited thereto. The predetermined event may be where various types of user input is sensed, for example, an event where a soft button displayed through the transparent display 110 is selected, an event where a physical button disposed on the display apparatus 100 is selected, and the like.

In this case, the reproducing operation of the music is maintained. In response to the camera object 1520 or the video object 1530 being selected in this state, the controller 130 photographs the subject by using the image photographing unit 120 and synthesizes a photographed image of the subject and the information on the reproduced music 2010. In response to the camera object 1520 being selected, the controller 130 may generate a synthetic image of a still image and the information on the reproduced music 2010. In response to the video object 1530 being selected, the controller 130 may generate a synthetic image of a video and the information on the reproduced music 2010. The synthetic image is stored in the storage of the display apparatus 100.

According to an embodiment of the present disclosure, the music which was being reproduced when the synthetic image was generated may be added as background music. The controller 130 may generate a synthetic image by synthesizing the information on the reproduced music 2010 and a photographed image and add music which was being reproduced when a predetermined event occurred to the generated synthetic image as the background music. In this case, upon completion of the photographing operation, a pop-up window for inquiring whether to add the reproduced music as the background music may be displayed. In response to the music being selected as the background music through the pop-up window by the user, the music may be added as the background music to the synthetic image of the photographed image and the information on the reproduced music 2010. For example, when the synthetic image is a video, the music may be reproduced as the background music upon the video being reproduced.

An image may be generated by excluding the information on the reproduced music 2010 and adding only the music which is currently being reproduced to the photographed image as the background music. That is, in response to the predetermined event occurring while the music is reproduced, only the graphic objects 1520, 1530 related to the function control of the image photographing unit 120 may be displayed. Upon completion of the photographing operation, an image to which the music which was being reproduced has been added as the background music may be generated.

According to an embodiment of the present disclosure as described above with reference to FIGs. 15 to 20, a video may be recorded along with a moving graphic object to be synthesized together. This embodiment will be described below in greater detail with reference to FIG. 17B.

Referring to FIG. 17B, in response to the video object 1530 being selected while the content 1710 is displayed, a video recording operation starts. The user may move the content 1710 while recording the video. For example, the user may touch and move the content 1710 to a desired location. Upon completion of the video recording operation, the controller 130 may generate a video where the movement of the content 1710 has been reflected.

According to the above-described embodiments, the user may use a particular object among the plurality of graphic objects displayed on the display apparatus 100 for generating a synthetic image with a user's input. In addition, the display apparatus 100 includes the transparent display 110, and thus, the user may generate a synthetic image while viewing an actual subject.

An error may occur between the subject that the user views through the transparent display 110 and the object photographed by the image photographing unit 120. In order to avoid this error, the error correction function described above with reference to FIGs. 9 to 11 may be used when a synthetic image is generated. That is, in response to the photographing operation being performed while only the predetermined graphic object among the plurality of graphic objects is displayed as the predetermined event occurs, the controller 130 may detect an area corresponding to a user's viewpoint from the photographed image, photographed by the image photographing unit 120, based on the location of the user's face and the user's gaze as recognized by the sensor 140 and synthesize the detected area and the predetermined graphic object.

In addition, a photographed image according to a user input of zooming in or zooming out on a subject, as described above with reference to FIG. 12, may be used for generating a synthetic image. That is, in response to the user input of zooming in or zooming out on the subject projected from the transparent display 110 being received while only the predetermined graphic object among the plurality of graphic objects is displayed as the predetermined event occurs, the image photographing unit 120 generates a photographed image where the subject has been enlarged or reduced according to the received user input. The transparent display 110 displays the photographed image where the subject has been enlarged or reduced along with the predetermined graphic object. Upon completion of the photographing operation, the controller 130 generates a synthetic image by synthesizing the photographed image where the subject has been enlarged or reduced with the predetermined graphic object.

Hereinafter, other embodiments of using the transparency of the transparent display 110 of the display apparatus 100 will be described.

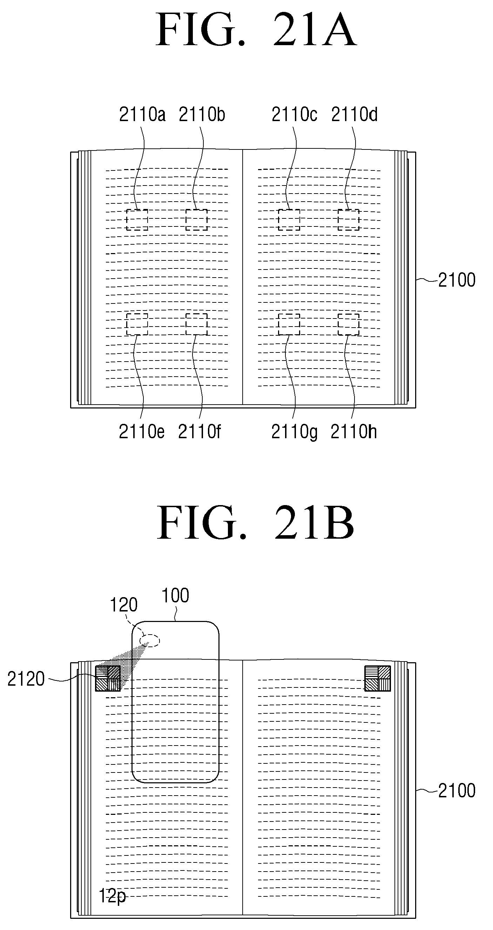

FIGs. 21A-21B, 22A-22B and 23 are views to describe a function of inputting writing to the display apparatus 100. The function of inputting writing may be realized by using a book. A detailed description on the book will be provided below with reference to FIGs. 21A-21B.

Referring to FIG. 21A, a book 2100 includes a plurality of communication chips 2110a to 2110h. The plurality of communication chips 2110a to 211h are components for communicating with a communicator of the display apparatus 100. The plurality of communication chips 2110a to 2110h may be realized as a Bluetooth or near field communication (NFC) chip, for example.

Referring to FIG. 21B, each page of the book 2100 includes a marker 2120 having book information on the book and page information on the page number.

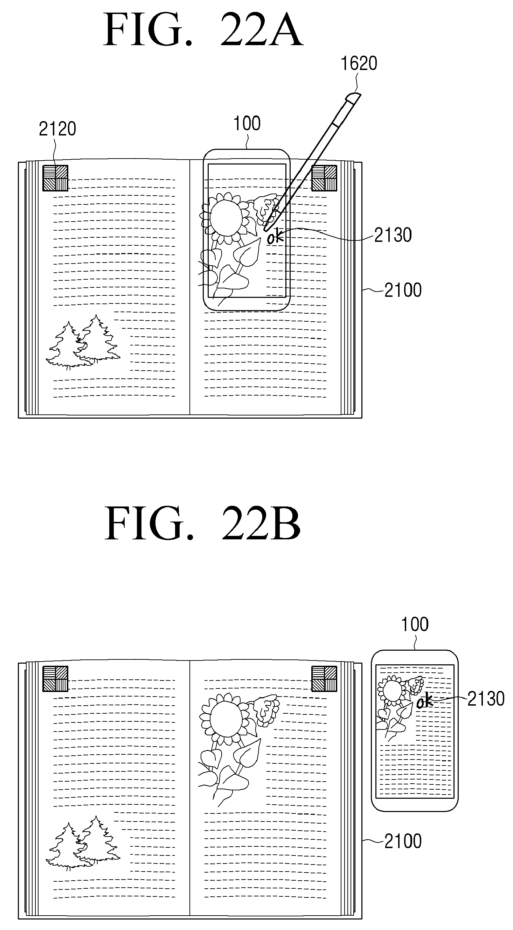

FIGs. 22A-22B are views to describe an embodiment of inputting writing into the display apparatus 100 by using the book described above with reference to FIG. 21.

Referring to FIG. 22A, the user inputs writing while locating the display apparatus 100 on the book 2100. In this case, the pen 1620 may be used as an input means. The display apparatus 100 displays inputted writing 2130. Accordingly, the user may see contents of the book 2100 at the rear side, shown through transparent display 110, along with the inputted writing 2130.

In this case, the display apparatus 100 may communicate with at least one of the plurality of communication chips 2110a to 2110h in the book 2100 while the writing is inputted to determine a relative location of the display apparatus 100 with respect to the book 2100. In addition, the display apparatus 100 may detect the marker 2120 from a photographed image of a particular page of the book 2100 generated by the image photographing unit 120 and obtain book information on the book and page information included in the detected marker 2120.

The display apparatus 100 stores the relative location of the display apparatus 100 determined during the writing input, the obtained book information, and the page information along with the inputted writing 2130.

The display apparatus 100 stores an E-book (content displayed on an book) corresponding to the E-book currently displayed on the book 2100 and may add the inputted writing 2130 to a particular area in a particular page of the E-book corresponding to the stored book information, page information, and information on the relative location to update the E-book.

As illustrated in FIG. 22B, in response to determining that the display apparatus 100 is spaced a certain distance from the book 2100 and deviates from a communication coverage range between the display apparatus 100 and the plurality of communication chips 2100a to 2100h in the book 2100, the display apparatus 100 may display the page of the E-book in which the writing has been inputted.

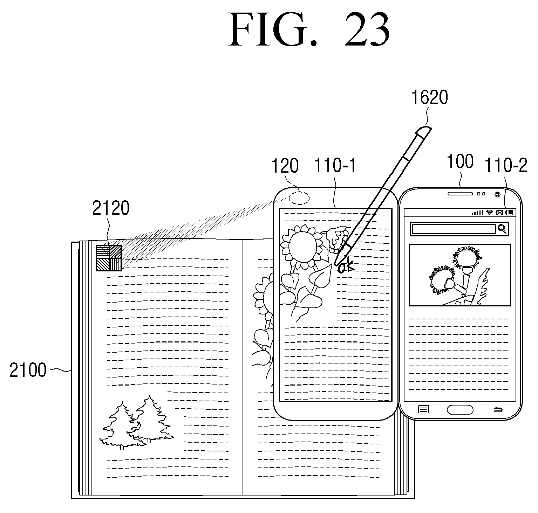

As illustrated in FIG. 23, in response to the marker 2120 of the book 2100 being photographed again by the display apparatus 100, the display apparatus 100 may display the corresponding page of the E-book in which the writing has been inputted. In addition, the display apparatus 100 provides a search function. In response to an area of the displayed E-book being selected, the display apparatus 100 may provide an Internet search result obtained by using text or an image corresponding to the selected area as a searching keyword. The user may select a particular area of the E-book by using the pen 1620.

The display apparatus 100 may be realized as having a dual display as illustrated in FIG. 23 to display more information simultaneously. In this case, a first display 110-1 may display the page of the E-book in which the writing has been inputted, and a second display 110-2 may display the Internet search result regarding the text selected in the first display 110-1.

According to an embodiment of the present disclosure, the display apparatus having the dual display includes a plurality of display layers. That is, the first display 110-1 may be layered on the second display 110-2. In this case, the first display 110-1 and the second display 110-2 may be connected to each other physically. Alternatively, the first display 110-1 and the second display 110-2 may exist separately by being connected through wireless communication. In this case, the first display 110-1 and the second display 110-2 may interact with each other in a wireless communication method, such as Bluetooth, NFC, and the like. Both the first display 110-1 and the second display 110-2 may be realized as a transparent display. Alternatively, one of the first display 110-1 and the second display 110-2 may be realized as a transparent display and the other one may be realized as a common opaque display.

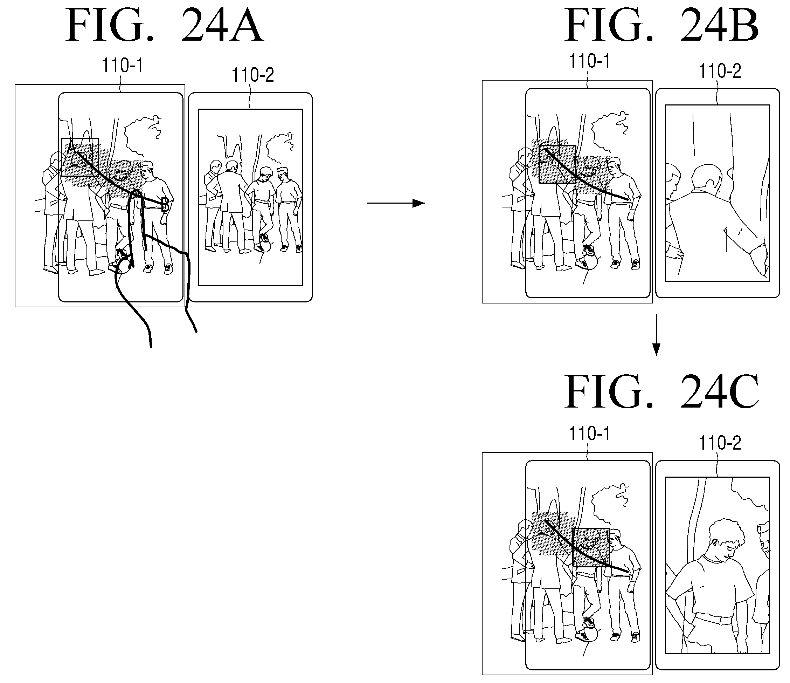

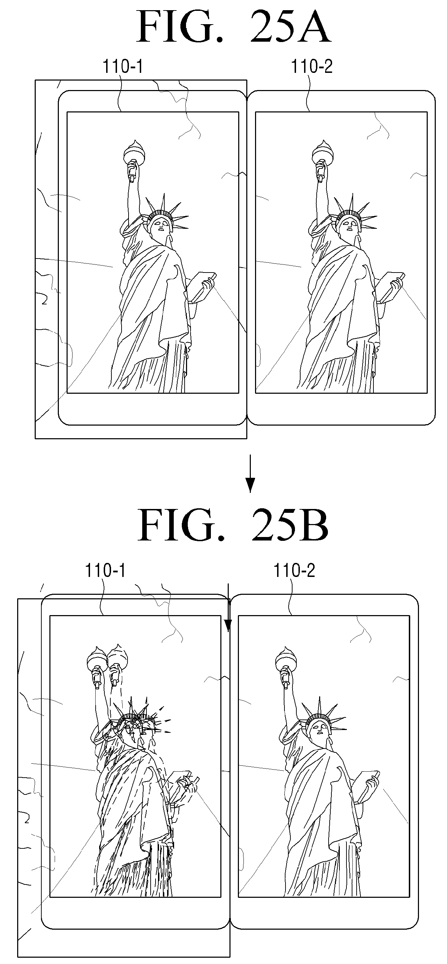

A detailed description on another embodiment of the present disclosure using the display apparatus 100 having the dual display will be provided below with reference to FIGs. 24A-24C and 25A-25B.

FIG. 24A-24C and 25A-25B are views to describe an embodiment of recording a video by using the display apparatus 100 having the dual display.

Referring to FIG. 24A, the user may view a subject at the rear side through the transparent first display 110-1 and designate a path for recording the video. As illustrated in FIG. 24A, in response to the path between point A and point B being inputted, the display apparatus 100 photographs a subject corresponding to the inputted path and generates a video as illustrated in FIGs. 24B and 24C. In this case, the subject to be photographed may be checked in real time through the second display 110-2.

According to an embodiment of the present disclosure, the user does not need to move the display apparatus 100 when recording a video.

FIGs. 25A-25B are views to describe an embodiment of photographing a picture by using the display apparatus 100 having the dual display.

Referring to FIGs. 25A-25B, FIG. 25A illustrates a view of a first photographing operation, and FIG. 25B illustrates a view of a second photographing operation. The user checks a subject through the transparent first display 110-1 and performs the first photographing operation, as illustrated in FIG. 25A. A first photographed image generated by the first photographing operation may be displayed on the second display 110-2. Subsequently, when the user wishes to perform the second photographing operation, the transparent first display 110-1 displays the first photographed image, as illustrated in FIG. 25B. Consequently, the user may perform the second photographing operation viewing the first photographed image. That is, as illustrated in FIG. 25B, the user may perform the second photographing operation while checking the subject and the first photographed image simultaneously through the transparent first display 110-1. Upon completion of the second photographing operation, a second photographed image may be displayed on the second display 110-2 as in FIG. 25B.

According to an embodiment of the present disclosure, the user may perform the photographing operation comparing a subject in a picture which was photographed previously and a subject that the user wishes to photograph currently.

According to an embodiment of the present disclosure, the user may view a subject through the transparent first display 110-1 by applying one of a plurality of filter effects. The second display 110-2 may display a photographed image to which the selected filter effect has been applied. Filter effects refer to changing brightness, chroma, and color of a picture. The user may perform the photographing operation viewing an actual subject to which a filter effect has been applied through the transparent first display 110-1.

The drawings illustrate some transparent displays as being opaque as the background is not reflected, which shows a change in the transparency of the transparent display. Accordingly, it is understood that the transparent display which is illustrated as being opaque may be realized such that the background is reflected.

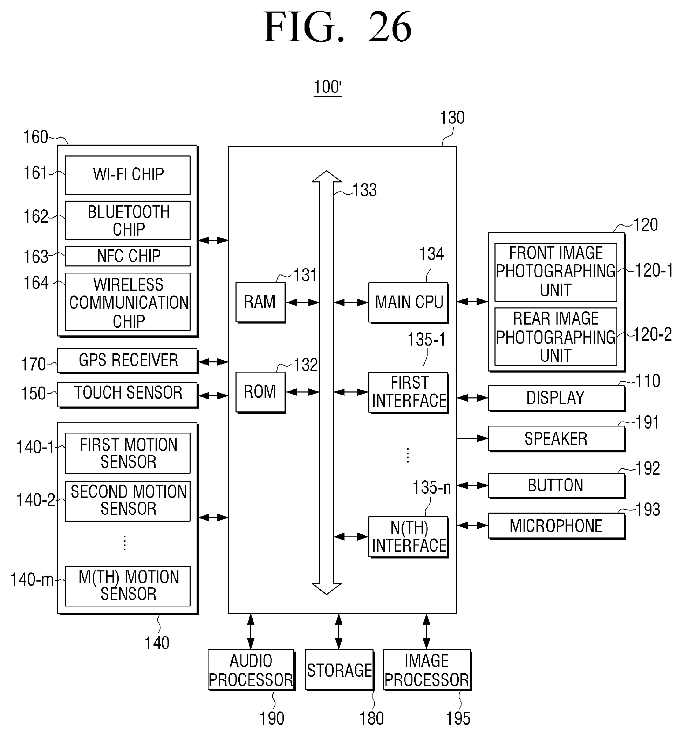

FIG. 26 is a block diagram of a display apparatus according to another embodiment of the present disclosure. Some components of FIG. 26 have been described above, and thus, a repeated description of those components will be omitted.

Referring to FIG. 26, a display apparatus 100' includes a transparent display 110, an image photographing unit 120, a controller 130, a sensor 140, a touch sensor 150, a communicator 160, a global positioning system (GPS) receiver 170, a storage 180, an audio processor 190, an image processor 195, a speaker 191, a button 192, and a microphone 193.

The transparent display 110 displays various graphic objects according to control of the controller 130. The transparent display 110 may change a display status of the graphic objects in response to an occurrence of a predetermined event.

The image photographing unit 120 photographs a still image or records a video according to input from a user. The image photographing unit 120 may include a front image photographing unit 120-1 and a rear image photographing unit 120-2. The front image photographing unit 120-1 is disposed in a direction of a user, that is, a display direction with reference to the transparent display 110, and the rear image photographing unit 120-2 is disposed in an opposite direction of the display direction. The front image photographing unit 120-1 generates a photographed image of the user. The controller 130 may recognize a location of a user's face and a user's gaze from the photographed image generated by the front image photographing unit 120-1.

The controller 130 may detect an image corresponding to a user's viewpoint from a photographed image generated by the rear image photographing unit 120-2 based on the location of the user's face and the user's gaze as recognized from the photographed image of the front image photographing unit 120-1.

The sensor 140 may include a plurality of motion sensors 140-1 to 140-m.

The plurality of motion sensors 140-1 to 140-m sense a rotational status of the display apparatus 100, a user's location, and the like. A geomagnetic sensor, an acceleration sensor, and a gyro sensor may be used for sensing the rotational status of the display apparatus 100. The acceleration sensor outputs a sensing value corresponding to gravitational acceleration which varies depending upon a gradient of an apparatus to which the sensor is attached. The gyro sensor measures Coriolis effect which detects an angular velocity. The geomagnetic sensor senses azimuth. Meanwhile, an image sensor, an infrared sensor, a ultrasonic sensor, and a proximity sensor may also be used for sensing a user's location. The sensor 140 may sense a location of a user's face and a user's gaze.

The touch sensor 150 may sense a touch input by a user or through a pen. The touch sensor 150 may include a touch sensor. The touch sensor may be realized as a capacitive type sensor or a pressure-resistive type sensor. The capacitive type sensor refers to a sensor which senses micro electricity which is excited into a user's body in response to a touch by a part of the user's body with respect to a surface of a display layer by using dielectric substances coating the surface of the display layer and calculates a touch coordinate based on the sensed micro electricity. The pressure-resistive type sensor includes two electrode plates embedded in the display apparatus 100. When a user touches a screen, an upper plate and a lower plate at the touched point come into contact with each other, and a current flows consequently. The pressure-resistive type sensor calculates a touch coordinate by sensing the current. As described above, the touch sensor may be realized as various types of touch sensor.

When a pen is used as an input means, and the pen includes an inner coil, the touch sensor 150 may include a magnetic field sensor for sensing a magnetic field which varies by the inner coil of the pen. Accordingly, the touch sensor 150 may sense an access input, that is, hovering, as well as a touch input.

The touch sensor 150 may perform a role of an input unit, receive a selection of content from a user, receive a user input for zooming in or zooming out on a subject projected from the transparent display 110, and receive writing inputted by a user or through a pen.

The controller 130 may determine a form of a touch input based on a signal sensed by the touch sensor 150. The touch input may include various types of inputs including simple touch, tab, touch and hold, move, flick, drag and drop, pinch-in, pinch-out, and the like. The controller 130 may control the components of the display apparatus 100 according to a user's touch input sensed by the touch sensor 150.

The storage 180 may store various data, such as, a program including an operating system (O/S) and various applications, user setting data, data generated during execution of an application, multimedia content, and the like.

As described above with reference to FIGs. 15 to 20, the storage 180 may store a generated synthetic image. In addition, as described above with reference to FIGs. 21 to 23, the storage 180 may include writing inputted by a user. The storage 180 may also store a relative location of the display apparatus 100 with respect to an electronic book determined as the display apparatus 100 communicates with a plurality of communication chips in the electronic book, book information obtained by photographing a marker of the book, and page information. In addition, the storage 180 may include an E-book. The storage 180 may include a home address used for a map function of the display apparatus 100.

The controller 130 may control the image processor 195 according to a sensing result of the touch sensor 150 and the plurality of motion sensors 140-1 to 140-m, an operational status of the button 192, a user's motion gesture obtained through the image photographing unit 120, and a voice command obtained through the microphone 193 to display various screens through the transparent display 110.

The controller 130 may communicate with external apparatuses through the communicator 160.

The communicator 160 communicates with various types of external apparatuses according to a variety of communication methods. The communicator 160 includes various communication chips including a wireless fidelity (Wi-Fi) chip 161, a Bluetooth chip 162, a near field communication (NFC) chip 163, and a wireless communication chip 164, and the like.

The Wi-Fi chip 161, the Bluetooth chip 162, and the NFC chip 163 perform communication according to a Wi-Fi manner, a Bluetooth manner, and a NFC manner, respectively. The NFC chip 163 refers to a chip which operates according to an NFC manner which may use the 13.56 MHz band among various Radio Frequency-Identification (RF-ID) frequency bands including 135 kHz, 13.56 MHz, 433 MHz, 860 to 960 MHz, 2.45 GHz, and the like. In the case of the Wi-Fi chip 161 and the Bluetooth chip 162, various connection information, such as, service set identifier (SSID) and a session key, may be transmitted/received first for communication connection setup, and then various information may be transmitted/received. The wireless communication chip 164 may perform communication according to various communication standards including Institute of Electrical and Electronics Engineers (IEEE), Zigbee, 3rd generation (3G), 3rd generation partnership project (3GPP), long term evolution (LTE), and the like. The controller 130 may display data received from an external apparatus through the communicator 160 in each transparent display layer.

The GPS receiver 170 receives GPS signals from GPS satellites to calculate a current location of the display apparatus 100. Upon the map function being executed, the controller 130 may calculate the current location of the display apparatus 100 by using the GPS signals received through the GPS receiver 170 and display a route guide screen in which the current location has been reflected in the transparent display. Accordingly, the user may be provided with a stereoscopic directions screen.

The image processor 195 configures a screen displayed in the transparent display 110, as described above. The image processor 195 may include various components, such as, a codec for encoding or decoding video data, a parser, a scaler, a noise filter, a frame rate conversion module, and the like.

The audio processor 190 processes audio data. The audio processor 190 may perform various processing operations, such as, decoding, amplification, or noise filtering with respect to audio data. In response to content including an audio signal being reproduced, the controller 130 may control the audio processor 190 to output the audio signal. The audio signal is transmitted to the speaker 191 and outputted through the speaker 191.

The speaker 191 outputs various notification sounds, music reproduction, or a voice message, as well as various audio data processed by the audio processor 190.

The button 192 may be realized as various types of buttons, such as, a mechanical button, a touch pad, or a wheel which is disposed on an area including a front surface, a lateral surface, or a rear surface of a main body of the display apparatus 100. The button 192 may perform a role of the input unit to receive a selection of content from the user. In addition, the button 192 may receive a user input for zooming in or zooming out a subject projected from the transparent display or receive an input of a user's writing.

The microphone 193 receives and converts a user's voice or other sounds into audio data. The controller 130 may use the user's voice inputted through the microphone 193 during a call process or convert the user's voice into audio data and store the converted audio data in the storage 180.

The controller 130 may perform a control operation according to a user's voice received through the microphone 193 or a user's motion recognized by the image photographing unit 120. The display apparatus 100 may operate in a normal mode in which the display apparatus 100 is controlled by a user's touch or a user input, a motion control mode, and a voice control mode. In the motion control mode, the controller 130 activates the image photographing unit 120 to photograph a user, track a change of a user's motion, and perform a control operation corresponding to the tracked user's motion. In the voice control mode, the controller 130 may analyze the user's voice received through the microphone 193 and operate in the voice recognition mode in which a control operation is performed according to the analyzed user's voice.

The display apparatus 100 may further include various external input ports for connecting the display apparatus 100 with various external terminals. The external input ports may include a headset, a mouse, a local area network (LAN), and the like.

The above-described operations of the controller 130 may be performed by the execution of the programs stored in the storage 180. The storage 180 may store O/S software for driving the display apparatus 100, various applications, various data inputted or set during execution of an application, a content, a touch gesture, a motion gesture, a voice command, event information, and the like.

The controller 130 controls overall operations of the display apparatus 100 by using various programs stored in the storage 180.

The controller 130 includes a random access memory (RAM) 131, a read-only memory (ROM) 132, a main central processing unit (CPU) 134, a first to n(th) interfaces 135-1 to 135-n, and a bus 133. The RAM 131, the ROM 132, the main CPU 134, and the first to n(th) interfaces 135-1 to 135-n may be interconnected through the bus 133.

The first to n(th) interfaces 135-1 to 135-n are connected to the aforementioned various components. One of the interfaces may be a network interface which is connected to an external apparatus through a network.

The main CPU 134 accesses the storage 180 and performs a boot-up operation by using an O/S stored in the storage 180. In addition, the main CPU 134 performs various operations by using various programs, contents, and data stored in the storage 180.

The ROM 132 stores a set of commands for system booting. In response to a power-on command being received and power being supplied, the main CPU 134 copies the O/S stored in the storage 180 to the RAM 131 according to a command stored in the ROM 132, and boots up a system by executing the O/S. Upon completion of the boot-up operation, the main CPU 134 copies various programs stored in the storage 180 to the RAM 131 and executes the programs copied to the RAM 131 to perform various operations.

In response to various types of user input being sensed through the touch sensor 150, the plurality of motion sensors 140-1 to 140-m, the button 192, the image photographing unit 120, the microphone 193, and the main CPU 134 determine whether an event corresponding to the event information stored in the storage 180 occurs by using the sensing result. Various events may be set. For example, the event may include where a user's touch or a user's button is selected, where a motion gesture or a voice command is received, where a command is received, where a command for reproducing content is received, where a predetermined time arrives or cycle lapses, where a system notification message occurs, where communication with an external source is performed, and the like.

According to an embodiment of the present disclosure, the display apparatus 100 may further include various external ports for connecting the display apparatus 100 with various external terminals including a universal serial bus (USB) port to which a USB connector may be connected, a headset, a mouse, or a LAN, a digital multimedia broadcasting (DMB) chip for receiving and processing a DMB signal, and various types of sensors.

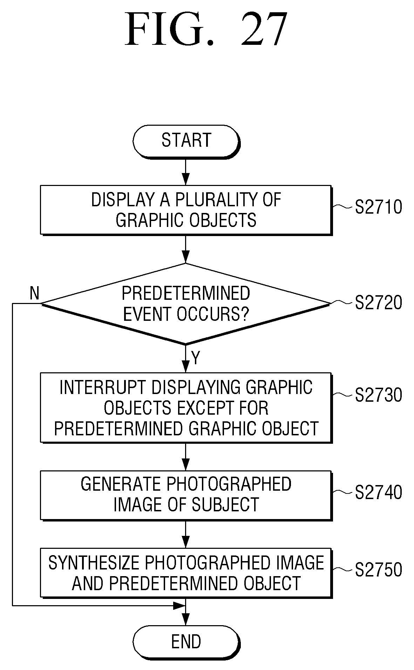

Hereinafter, a method for controlling a display apparatus will be described with reference to the flowchart of FIG. 27.

FIG. 27 is a flowchart to describe a method for controlling a display apparatus having a transparent display according to an embodiment of the present disclosure. Referring to FIG. 27, the display apparatus displays a plurality of graphic objects in step S2710. The graphic objects may include an image, text, an execution screen, a web browser screen, and the like.

In response to a predetermined event occurring in step S2720, the display apparatus interrupts displaying the graphic objects, except for a predetermined graphic object among the plurality of displayed objects, in step S2730. That is, only the predetermined graphic object among the plurality of displayed objects is displayed. The predetermined event may be where a particular motion of the display apparatus 100 is sensed. The predetermined graphic object is determined differently depending upon a status of a screen displayed on the display apparatus 100. As an example, upon content inputted by a user being displayed in real time, the predetermined graphic object may be a graphic object corresponding to the content which is being inputted in real time among the plurality of graphic objects displayed on the screen, for example, a message that is being inputted in a message input box by the user. As another example, upon content selected by the user being displayed on the screen, the predetermined graphic object may be a graphic object corresponding to the content selected from among the plurality of graphic objects displayed on the screen, for example, a phrase selected by the user from a page of an E-book displayed on the screen.

In response to a predetermined event occurring, a graphic object related to the function control of an image photographing unit of the display apparatus may be displayed along with the predetermined graphic object.

The display apparatus photographs a subject projected from a transparent display and generates a photographed image in step S2740. Specifically, in response to a user input for zooming in or zooming out of the subject projected from the transparent display being received, the display apparatus may generate a photographed image in which the subject has been enlarged or reduced according to the user input. In this case, in response to the user input being received while the predetermined event occurs, the display apparatus may display the photographed image in which the subject has been enlarged or reduced along with the predetermined graphic object.

The display apparatus synthesizes the generated photographed image and the predetermined graphic object in step S2750. Specifically, the display apparatus may recognize a location of a user's face and a user's gaze through a sensor and detect an area corresponding to a user's viewpoint from the photographed image generated by the image photographing unit based on the location of the user's face and the user's gaze recognized by the sensor. The display apparatus may synthesize the detected area and the predetermined graphic object.

In response to the predetermined event occurring while music is reproduced through the display apparatus, the display apparatus may generate a synthetic image by synthesizing music information on the reproduced music with the photographed image and add music which was being reproduced when the predetermined event occurred to the generated synthetic image as background music.

Additional control operations other than those described in the above-described various embodiments may be performed. However, specific flowcharts for the embodiments and related descriptions will be omitted.

As described above, the display apparatus may support various control methods. The above embodiments may be realized separately or combined with each other according to need.

The method for controlling a display apparatus may be stored in a non-transitory storage medium. The non-transitory storage medium may be included in various types of apparatus.

The non-transitory storage medium refers to a medium which may store data permanently or semi-permanently rather than storing data for a short time, such as, a register, a cache, volatile memory, and the like, and may be readable by an apparatus. The above-described various applications and programs may be stored in and provided through the non-transitory storage medium, such as a compact disc (CD), digital versatile disk (DVD), hard disk, Blu-ray disk, universal serial bus (USB), memory card, read-only memory (ROM), and the like.

The non-transitory storage medium may include and provide a program code for performing operations of displaying a plurality of graphic objects, interrupting, in response to a predetermined event occurring, the graphic objects except for a predetermined graphic object among the plurality of displayed graphic objects, generating a photographed image by photographing a subject projected from a transparent display, and synthesizing the generated photographed image and the predetermined graphic object.

As described above, embodiments of the present disclosure have been shown and described. The foregoing embodiments and advantages are not to be construed as limiting the present disclosure. The present disclosure may be readily applied to other types of devices. Also, the description of the embodiments is intended to be illustrative, and does not limit the scope of the claims, and many alternatives, modifications, and variations will be apparent to those skilled in the art. Accordingly, it should be interpreted that besides the embodiments listed herein, all modifications or modified forms derived based on the technical ideas of the present disclosure are included in the scope of the present disclosure as defined in the claims, and their equivalents.

## Claims

1. A display apparatus comprising:
a transparent display configured to display a plurality of graphic objects, and in response to a predetermined event occurring, interrupt displaying the graphic objects except for a predetermined graphic object among the plurality of displayed graphic objects;
an image photographing unit configured to generate a photographed image by photographing a subject projected from the transparent display; and
a controller configured to synthesize the generated photographed image and the predetermined graphic object.

2. The display apparatus of claim 1, wherein in response to the predetermined event occurring, the transparent display displays a graphic object related to control of the image photographing unit along with the predetermined graphic object.

3. The display apparatus of claim 1, wherein the predetermined event is where a predetermined motion of the display apparatus is sensed or where pressure with respect to a certain part of the display apparatus is sensed.

4. The display apparatus of claim 1, further comprising:
a sensor configured to recognize a location of a user's face and a user's gaze and is disposed in a display direction of the transparent display,
wherein the image photographing unit is disposed in an opposite direction of the display direction, and
wherein the controller detects an area corresponding to a user's viewpoint from the photographed image, photographed by the image photographing unit, based on the location of the user's face and the user's gaze recognized by the sensor, and synthesizes the detected area and the predetermined graphic object.

5. The display apparatus of claim 1, wherein the predetermined graphic object is at least one of a text object inputted by a user and a graphic object inputted through a pen.

6. The display apparatus of claim 1, further comprising:
an input unit configured to receive a selection of content displayed on the transparent display,
wherein the predetermined graphic object is content selected through the input unit.

7. The display apparatus of claim 1, wherein the predetermined graphic object is music information on music which is reproduced by the display apparatus.

8. The display apparatus of claim 7, wherein the controller generates a synthetic image by synthesizing the music information and the photographed image, and adds reproduced music to the generated synthetic image as background music when the predetermined event occurs.

9. The display apparatus of claim 1, further comprising:
an input unit configured to receive a user input for zooming in or zooming out of the subject projected from the transparent display,
wherein the image photographing unit generates a photographed image in which the subject is enlarged or reduced according to the received user input,
wherein in response to the predetermined event occurring and the user input being received, the transparent display displays the generated photographed image along with the predetermined graphic object.

10. The display apparatus of claim 1, further comprising:
a communicator configured to perform wireless communication with an external communication chip;
an input unit configured to receive a user's writing; and
a storage configured to store the received user's writing,
wherein the controller detects a marker from a photographed image generated by photographing a page of a book through the image photographing unit, obtains book information and page information on the book included in the detected marker, determines a relative location of the display apparatus with respect to the book by communicating with at least one of a plurality of communication chips in the book through the communicator while the user's writing is received, and stores the obtained book information, page information, and location information on the determined relative location in the storage along with the received user's writing.

11. The display apparatus of claim 10, wherein the storage stores an electronic book (E-book),
wherein the controller adds the received user's writing to a certain area in a certain page of the E-book to update the E-book, the certain area corresponding to the stored book information, page information, and location information.

12. The display apparatus of claim 11, wherein in response to determining that the communicator deviates from a communication coverage range between the display apparatus and the plurality of communication chips in the book, the controller controls the transparent display to display a page of the updated E-book.

13. A method for controlling a display apparatus with a transparent display, the method comprising:
displaying a plurality of graphic objects;
interrupting, in response to a predetermined event occurring, displaying the graphic objects except for a predetermined graphic object among the plurality of displayed graphic objects;
generating a photographed image by photographing a subject projected from the transparent display; and
synthesizing the generated photographed image and the predetermined graphic object.

14. The method of claim 13, wherein in response to the predetermined event occurring, interrupting displaying the graphic objects comprises displaying a graphic object related to a photographing operation along with the predetermined graphic object.

15. The method of claim 13, wherein the predetermined event is where a predetermined motion of the display apparatus is sensed or where pressure with respect to a certain part of the display apparatus is sensed.
